# EUROPEAN PATENT SPECIFICATION

(11) **EP 2 015 484 B1**
(45) Date of publication and mention of the grant of the patent: **25.05.2011**
(21) Application number: 07012007.6
(22) Date of filing: 19.06.2007
(51) Int. Cl.: H04J 3/06

(54) **Method of data transmission and associated transceiver**
Verfahren zur Datenübertragung und entsprechendes Sende-/Empfangsgerät
Procédé pour la transmission de données et émetteur-récepteur associé

(43) Date of publication of application: 14.01.2009
(73) Proprietor: Nokia Siemens Networks Oy, 02610 Espoo (FI)
(72) Inventor: Schug, Winfried, 81739 München (DE); Schweikl, Franz, 85457 Wörth (DE); Wonka, Rainer, 81379 München (DE)
(74) Representative: Bruglachner, Thomas E.

(56) References cited:
- EP-A- 0 678 989
- WO-A-99/00922
- US-A- 5 710 765

## Description

The work leading to this invention has received funding from the European Community's Seventh Framework Programme FP 7 / 2007 - 2013 under grant agreement no. 026442.

### Background of the Invention

### Field of the Invention

The invention relates to a method and an apparatus for transmitting and receiving data. More specifically, the invention relates to a method of transmitting and receiving serial data over a communication link such as an optical fibre in a time-division multiple access (TDMA) scheme and a transceiver using said method of transmitting and receiving data.

### Description of Related Art

Data transmission usually involves sending and receiving data at a maximum speed over a communication link. The communication link often allows for transmission of no more than one bit at a time such that data has to be transmitted in a serial way. To achieve high baud rates (a high number of symbols, each symbol comprising one bit or a plurality of bits, per time) that may accommodate a high number of subscribers, very high serial data rates up to tens of gigabits per second have been realised. Senders and receivers communicating over such a high data-rate serial communication link have to be able to send and receive data at the high transmission data rate which makes circuit design difficult and requires fast circuits which consume high power. Since higher layers of transmission protocols require complex data analysis over large sets of data and therefore a large number of logic gates when realised in a microchip, serialisers and deserialisers are used to transform a parallel data stream of a low band rate to a serial data stream of a high band rate and vice versa. Thus, processing of high transmission protocol layers can be performed on symbols of a large symbol width at a much lower band rate (and therefore a low clock rate of a microchip) and only a small part of the involved circuitry has to be able to run at the speed of the high transmission baud rate. However, if the serialisation/deserialisation ratio e.g. is 16 (16 bits of data input at a baud rate of 1/16^{th} of the transmission baud rate are serialised to a serial stream at the transmission baud rate at the sender and the serial data stream at the transmission baud rate is deserialised to 1/16^{th} of the transmission baud rate at the receiver), only multiples of 16 bits (a word or a word) may be sent at a time because of the input symbol width of 16 bits.

In a typical network setup such as a Passive Optical Network (PON) a plurality of (upstream) senders communicate with a single receiver (an access node, a repeater or such) sharing a single channel having a predetermined channel bandwidth (such as a cable, an optical fibre, or air). In such a network setup the channel bandwidth needs to be distributed among the senders by using a multiplexing scheme such that communication between the senders and the receiver is coordinated thereby avoiding interference between the individual senders. A popular multiplexing scheme is the time-division multiple access (TDMA). In a time-division multiple access network transmission time is divided into a plurality of time-slots which then are assigned to the individual senders. Each sender may only transmit data during a time-slot assigned to it and has to remain quiet during the remaining transmission time. Thus, collision between senders is avoided in a simple way.

In a TDMA scheme there is a problem that delays may occur during transmission of data. Such delays may be caused e.g. by transmission paths of different lengths, reflections, and incomplete synchronicity of clocks (clock jitter and such). In order to avoid overlap between consecutive time-slots, guard-times have to be inserted during which no sender may transmit data. The downside of this approach is that channel bandwidth is lost because the channel may not be used during guard-times. Another problem arises from the use of serialisers/deserialisers: since only words of a number of bits corresponding to the serialisation/deserialisation ratio may be input to the sender, transmission time shows a relatively coarse granularity because transmission may only be interrupted when all input bits have been sent. Thus, guard-times have to be longer than the transmission time of one word. With increasing transmission data rates, serialisation/deserialisation ratios also increase which entails longer guard-times.

A typical TDMA PON system suffering from the aforementioned drawbacks of the prior art is disclosed in European Patent Application 0 678 989 A2. As is standard in the art, a single line termination (OLT) communicates with a plurality of network units (ONU) over a fibre tree in a time-divisional scheme. EP 0 678 989 A2 describes the use of serialisers and deserialisers and proposes to carry out phase correction between the high-speed clock used for serial transmission over the fibre and the low-speed clock used for parallel data handling and derived from the high-speed clock by frequency division at the low speed of clock used for handling the parallel data.

### Summary of the Invention

The invention has been made in an effort to provide an improved ratio between channel bandwidth and effective channel bandwidth (the part of the channel bandwidth which may be used for data transmission in a TDMA scheme under real-world conditions).

Therefore, a first aspect of the invention provides a method of transmitting data from an upstream sender to a receiver. The method comprises:dividing transmission time into a plurality of time-slots, each of which having a start time and an end time;
assigning a first time-slot of the plurality of time-slots to the sender;
determining a plurality of first word transmission start times between the start time and the end time of the first time-slot;
during the first time-slot, serialising a synchronisation signal;
during the first time-slot assigned to the sender, sending the serialised synchronisation signal;
receiving the synchronisation signal at a reception time;
deserialising the synchronisation signal;
determining an offset time between the reception time of the synchronisation signal and a word boundary at the receiver;
transmitting the offset time to the sender;
assigning a second of the plurality of time-slots to the sender;
determining a plurality of second word transmission start times between the start time and the end time of the second time-slot;
determining a last word transmission start time of the plurality of second word transmission start times;
reading a first word of input data;
serialising the first word of input data;
at the last word transmission start time, start sending the serialised first word of input data; and
at a last word transmission end time, the last word transmission end time being a word transmission time minus the offset time after the last word transmission start time, muting the sender.

Thereby, despite the fact that always words of input data are read, serialised and sent, fine control of the guard-time at the end of the time-slot assigned to the sender is possible. Since the guard-time at the end of the time-slot needs not take at least as long as the transmission time of a word of input data, guard-times may be reduced in a TDMA scheme according to the first aspect of the invention thereby decreasing the time during which the channel may not be used for data transmission. The invention achieves this by sending a word of parallel data even when the time remaining until the end of the time-slot is not long enough for transmission of the complete word. In order to still avoid collision between senders, the sender is muted for that part of the bits of the word that would be sent and received after the end of the time-slot. The number of bits that need to be muted is determined by sending a synchronisation signal at the beginning of the data transmission. The receiver determines the position of the synchronisation relative to a word boundary of the parallelised received data. This position corresponds to a delay between the clocks of the sender and the receiver and is usually influenced by channel delay. The delay, offset time or position is transmitted back to the sender which then can use the offset time to determine a minimum guard-time required at the end of the time-slot (i.e. continue to transmit data until shortly before the end time of the time-slot).

Preferably, after the first word of input data is read, barrel-shifting of the first word of input data by a number of bits corresponding to the offset time is performed. This has the advantage that the clocks of the sender and the receiver need not be synchronised according to the offset time determined by the receiver. Instead, the sender simply barrel-shifts the input data stream by a number of bits corresponding to the offset time thereby aligning word boundaries of the data to be sent with the word boundaries at the receiver. Thus, when the sender is muted at the end of the time-slot, always a complete word of parallel input data has been sent.

Here, barrel-shifting refers to continuously shifting a stream of parallel input data. Hence, each word of parallel data output by the barrel-shifter comprises a number of bits belonging to a first word of parallel data input to the barrel-shifter and a number of bits belonging to a second word of parallel data, immediately following the first word of parallel data. Accordingly, a barrel-shifter commonly comprises FIFO (first-in, first-out) storage for a preceding word of parallel data.

In a preferred embodiment of the invention, the method may further comprise:
determining an early word transmission start time, the early word transmission start time being less than the word transmission time before the start time of the second time-slot assigned to the sender;
reading a second word of input data;
serialising the second word of input data;
at the early word transmission start time, muting the sender and start sending the serialised second word of input data; and
at an enable time, the enable time being after the start time of the second time-slot assigned to the sender and the word transmission time minus the offset time after the early word transmission start time, enabling the sender.

This embodiment of the invention has an advantage in that it also allows for reduction of time not used for sending at the beginning of the time-slot assigned to the sender. When the offset time has been determined, during the next time-slot assigned to the sender, data transmission may be started right at the beginning of the time-slot or shortly afterwards because the transmission delay is already known. Thus, data transmission can be started right at the beginning of the time-slot and not as late as at the first input clock cycle after beginning of the time-slot. Instead, the serialiser may be started even before the start time of the time-slot while keeping the sender muted. After a part of the word of data being sent that would have entered the channel too early has been output by the serialiser, the sender is enabled for transmission of the remaining bits of the word of data.

As before, this embodiment may further include a step of barrel-shifting the input data such that the first bit of a word of parallel input data is sent when the sender has just been enabled.

A second aspect of the invention provides a transceiver for transmitting data. The transceiver includes a serialiser having a parallel input, a sender having an input connected to the serialiser, and a receiver. The serialiser is adapted to receive parallel data at an input clock rate, to output serial data at an output clock rate corresponding to the input clock rate multiplied by a serialisation ratio and to start outputting the serial data at one of a plurality of word transmission start times. The sender is adapted to receive the serial data from the serialiser and to send the serial data. The receiver is adapted to receive data.

According to the invention, the receiver is further adapted to receive an offset time value and the sender comprises a first control input for a first control signal and is adapted to cease sending the serial data in response to the first control signal. The transceiver further comprises a controller having a first control output connected to the first control input of the sender and a data input connected to an output of the receiver adapted to receive the offset time value. The controller is adapted to receive the offset time value, the controller being adapted to determine a last word transmission start time of the plurality of word transmission start times and a last word transmission end time, the last word transmission end time being a word transmission time minus the offset time after the last word transmission start time, and to output the first control signal to the sender at the last word transmission end time.

Preferably, the transceiver further comprises a barrel-shifter having a parallel output connected to the parallel input of the serialiser and a second control input connected to a second control output of the controller. Then, the controller is further adapted to output a shift value to the barrel-shifter, the shift value indicating a number of bits having a transmission time corresponding to the offset time value. The barrel-shifter is adapted to barrel-shift parallel data by the number of bits indicated by the shift value and to output the barrel-shifted parallel data to the serialiser.

In order to provide fine control of the point in time at the beginning of a time-slot assigned to the sender when the sender starts to transmit data, in a preferred embodiment of the invention, the controller is further adapted to output the first control signal until an enable time, the enable time being the offset time before a first word transmission start time of the plurality of word transmission start times.

### Brief Description of the Drawings

A more complete appreciation of the present invention and many of the attendant advantages thereof, will be readily apparent as the present invention becomes better understood by reference to the following detailed description when considered in conjunction with the accompanying drawings, wherein:
- FIG. 1: is a network diagram illustrating data transmission during downstream transmission;
- FIG. 2: is a network diagram illustrating data transmission during upstream data transmission;
- FIG. 3: is a timing diagram of a time-slot illustrating communication between a sender and a receiver during upstream data transmission; and
- FIG. 4: is another timing diagram of the time-slot.

### Detailed Description of the Invention

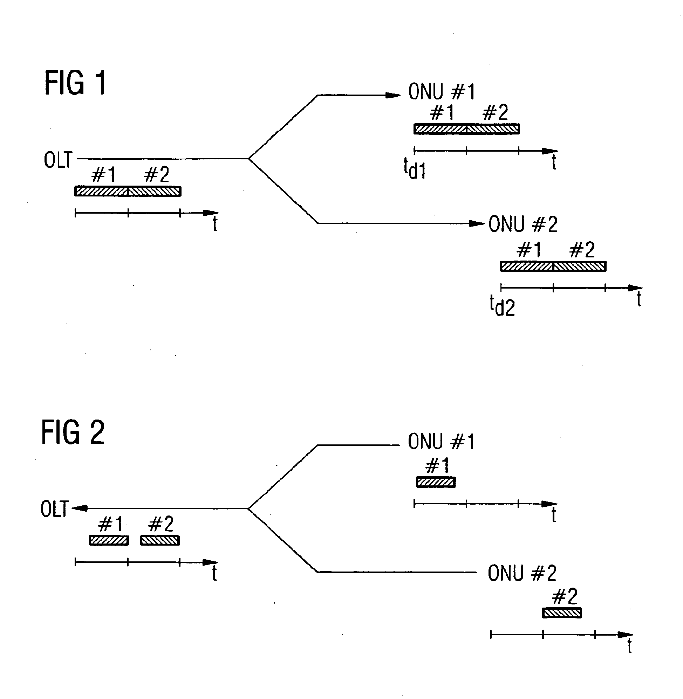

FIG. 1 shows a network diagram illustrating data transmission during downstream data transmission in a passive optical network (PON). The network comprises an OLT (Optical Line Termination) and two ONUs (Optical Network Units) ONU #1 and ONU #2 which are connected to the OLT over an optical fibre which is indicated by a line. The network has a tree-type configuration wherein the ONUs are connected to the OLT over at least one split in the data line. Thus, each ONU in the PON represents a leaf of the tree-type configuration.

The OLT is connected to other networks via a backbone (not shown) in order to provide data service from the backbone to the customers. The ONUs #1 and #2 are situated at the sites of two respective customers and function to connect the customers' local networks to the MAN or LAN.

The term "downstream data transmission" denotes data transmission from the backbone via the OLT to the customer, while "upstream data transmission" refers to the opposite direction of data flow from the customer over the backbone. The direction of data flow is indicated in both FIGS. 1 and 2 by arrow heads attached to the lines representing the fibres.

In downstream data transmission the OLT transmits data in a TDM scheme where data for each ONU is interleaved with data for the remaining ONUs in the network. The data may be interleaved on a byte-by-byte basis or by larger blocks of data. All ONUs in the network will physically receive the same data signal but will only read and deserialise the portion of the downstream data that is directed to the specific ONU. In Fig. 1, data directed to ONU #1 is labelled #1 and data directed to ONU #2 is labelled #2. The data diagram at the OLT depicts how data for ONU #1 and ONU #2 are sent in a consecutive manner without any guard-time in between. A guard-time is not required because during downstream data transmission there is only one data source. As can be seen from the timing diagrams of ONU #1 and ONU #2, the downstream data arrives at the ONUs delayed by the channel delay which largely depends on the distance between the OLT and the respective ONU. Since ONU #1 is situated closer to the OLT, the channel delay t_{d1} is lower than the channel delay t_{d2} of ONU #2. However, the channel delays are irrelevant during downstream data transmission as mentioned above.

FIG. 2 is a network diagram of the same network as that of FIG. 1 illustrating data transmission during upstream data transmission. Now, the direction of data flow is from the ONUs to the OLT. Since during upstream data transmission there are more than one data sources, the channel has to be divided using a TDMA scheme. The OLT assigns to each ONU a respective time-slot for transmitting upstream data. Because of the different channel delays between the ONUs and the OLT, guard-times have to be introduced between the time-slots to avoid data collision. If guard-times are too short, the last sets of data that have entered the network on a distant ONU during the assigned time-slot will only arrive at a network junction close to the OLT when data from another ONU is already being fed into the networks. Hence, guard-times have to be chosen to accommodate the channel delays present in the network.

The relation between data transmissions from the ONUs is illustrated in FIG. 2. ONU #1 starts to send a data package #1 shortly after the beginning of the time-slot assigned to ONU #1. ONU #2 has to remain silent during this time and wait for its time-slot in order to transmit its data package #2. ONU #2 starts sending its data right at the beginning of its time-slot. Since ONU #2 is located farther away from the OLT, data package #2 arrives later within the time-slot assigned to ONU #2 than data package #1 in the respective time-slot.

In the example of FIG. 2 data arrives at the OLT within their respective time-slots and no data collision happens. However, transmission of package #1 was started late. ONU #2 could only transmit all of its data with the time-slot because it started transmission right at the beginning of the time-slot. Accordingly, the guard-times of FIG. 2 are set to the required minimum. If ONU #2 is not able to commence data transmission right at the beginning of the time-slot as is ONU #1, guard-times have to be increased. However, granularity of time is low on the sender side because data is input at the sender in words due to the use of serialisers and deserialisers. Hence, in a conventional setup the sender may only be started at times corresponding to multiples of the input word length. As data rates keep increasing, so do serialisation/deserialisation ratios and therefore granularity of time gets more and more coarse relative to the data rate. Thus, fine control of the start time of data transmission at the sender in order to reduce guard-times to a required minimum is not possible in a traditional setup.

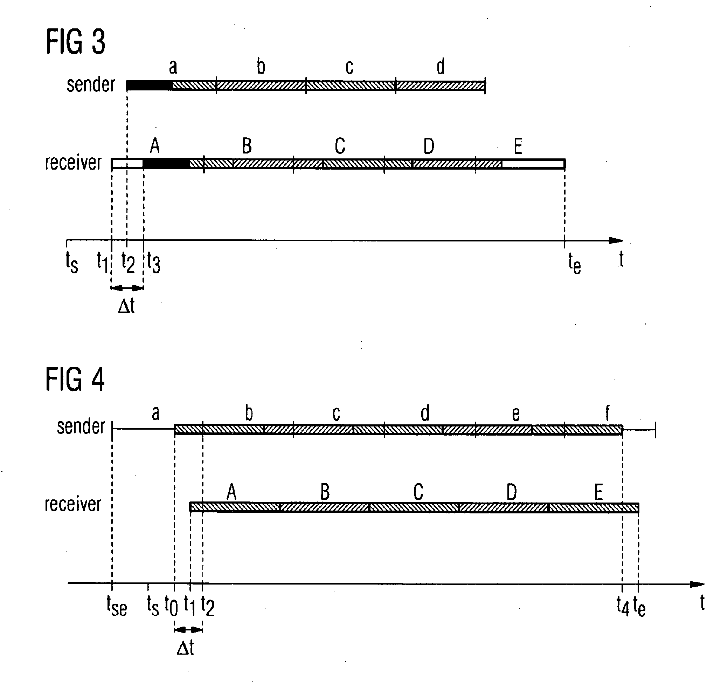

FIG. 3 is a timing diagram of a time-slot illustrating communication between a sender and a receiver during upstream data transmission. The time-slot starts at a start time tₐ, the receiver starts operation shortly afterwards at a time t₁ which in some embodiments of the invention may be the same time as the start time tₛ. The sender starts sending data at a time t₂ which is safely within the time-slot assigned to the sender. Here, the clocks of the sender and the receiver according to which parallel data is read and serialised at the sender and deserialised and output at the receiver, respectively, have a clock offset of t₂ minus t₁. In addition to this, there is a channel delay t₃ minus t₂ where t₃ is the time at which the receiver receives the first bit or symbol sent by the sender at the time t₂. The clock offset and the channel delay yield an offset time Dt. The guard-times of a time-division multiple access scheme will be chosen with regard to the expected delays/offsets. Thus, in a system where long delays/offsets may occur, guard-times will be long.

During a first time-slot assigned to the sender, the sender sends a stream of data packages (a, b, c, d) which are received within a stream of data packages (A, B, C, D, E) at the receiver. According to the invention, the offset time between the sender and the receiver is determined in order to reduce the idle time at the beginning of the time-slot. This is accomplished by sending a synchronisation signal (e.g. a byte of data containing a predetermined symbol, marked black in FIG. 3) which may be detected by the receiver regardless of the offset time. The receiver is adapted to search every two consecutive words of parallel output data for the synchronisation word and to determine the offset time. The offset time corresponds to the offset of the first bit of the synchronisation word to the first bit of the word of parallel data (that is the word boundary of the deserialised data) wherein the first bit of the synchronisation word is found multiplied by the transmission time of a bit. "Transmission time of a bit" or "bit transmission time" must not be misunderstood as the time a bit requires to travel from the sender to the receiver, in the scope of this document these terms refer to the reciprocal value of the data rate and hence to the time during which a bit is output by the sender. Accordingly, "word transmission time" or "transmission time of a word" refers to the bit transmission time multiplied by the serialisation/deserialisation ratio. Because of the fixed relation between a bit or a number of bits and the transmission time, a time such as the offset time may be expressed by means of a number of bits and vice versa.

The receiver sends the determined offset time Δt to the sender (thus, both the sender and the receiver are transceivers because they both comprise a respective sender and receiver circuit; when referring to FIGS. 1 and 2, the term "sender" refers to the data source and "receiver" to the data sink rather than the actual components performing the sending/receiving action). During the next time-slot the sender reduce the idle time at the beginning of the time-slot by referring to the offset time sent back by the receiver. Thus, idle time between the end time tₑ of a previous time-slot and the start time tₛ of the current time-slot can be shorter than in traditional systems. Only before the offset time is known, the sender must wait until some time after the start time tₛ of the time-slot thereby effectively increasing the guard-time to the time required in a traditional system.

FIG. 4 is another timing diagram of the time-slot showing communication between the sender and the receiver after the offset time Δt has been sent back to the sender. The sender now starts operation at an early start time tₛₑ which is one word transmission time before the previous time t₂ (relative to the start times of the respective time-slots) at which the sender started operation when the offset time was still unknown. In the example of FIG. 4, the early start time tₛₑ is even before the start time tₛ of the time-slot. In order to not send data outside the time-slot assigned to the sender, the output of the sender is disabled (muted) for a time corresponding to a word transmission time minus the offset time Dt. When the output of the sender is enabled a time t₀, the sender starts sending data over the channel. t₀ is the offset time before the time t₂ at which the sender had started operation in the previous occurrence of the time-slot. Thus, the data sent starting from t₀ will arrive at the receiver at the time t₁ when the receiver starts receiving the first word of data. In this way, the time during which the sender does not send data is controlled with a granularity corresponding to a bit transmission time and therefore with a much finer granularity than in traditional systems. This enables reduction of idle times at the beginning of time-slots because the time during which the sender is active may be controlled more precisely.

In the same way, the sender can be controlled to reduce an idle-time at the end of the time-slot and hence to make use of the whole time-slot. This is accomplished by continuing to send data during a last word transmission that would not finish before the end time of the time-slot. In order to not violate the restrictions set by the time-slot, the sender is muted at a time t₄ one offset time before the end of the last word transmission.

Thus, the invention has an advantage in that control of active time during which the sender is active and of idle time during which the sender may not send data over the channel is possible with a fine granularity and independent from the length and phase offsets of a word transmission at the sender and the receiver. In order to send the desired data over the channel, the input data should be aligned with the active time of the sender (i.e. the time between t₀ and t₄ in FIG. 4). An embodiment of the sender therefore comprises a barrel-shifter which is adapted to barrel-shift the parallel input data by a number of bits corresponding to the offset time Δt. Then, transmission of the first bit of serial data starts precisely at the time t₀ when the sender is enabled. Since the whole stream of input data is barrel-shifted by the number of bits corresponding to the offset time Δt, the last bit of input data has been sent when the sender is muted at the time t₄. In FIG. 4, word boundaries of the input data prior to barrel-shifting are marked by vertical lines and a changing pattern inside the words of data a, b, c, d, e, f.

The remaining bits of parallel input data at the beginning (between tₛₑ and to) and at the end (after t₄) can be filled with arbitrary data or simply ones or zeroes as they never enter the channel. A positive side-effect of the barrel-shifting is that data will be aligned with the output clock at the receiver.

Determining of the offset time Δt can be performed only once at the start of the communication or several times during the communication (e.g. periodically) depending on channel characteristics. E.g. an optical fibre will provide constant characteristics over a long time such that the offset time Δt will also remain constant and determination of the Δt is only needed once. For channels with variable characteristics such as air periodical determination of the offset time Δt will be necessary.

## Claims

1. A method of transmitting data from a sender to a receiver, the method comprising:
dividing transmission time into a plurality of time-slots, each of which having a start time and an end time;
assigning a first time-slot of the plurality of time-slots to the sender;
determining a plurality of first word transmission start times between the start time and the end time of the first time-slot;
during the first time-slot, serialising a synchronisation signal;
during the first time-slot, sending the serialised synchronisation signal;
receiving the synchronisation signal at a reception time;
deserialising the synchronisation signal;
determining an offset time between the reception time of the synchronisation signal and a word boundary at the receiver;
transmitting the offset time to the sender;
assigning a second of the plurality of time-slots to the sender;
determining a plurality of second word transmission start times between the start time and the end time of the second time-slot;
determining a last word transmission start time of the plurality of second word transmission start times;
reading a first word of input data;
serialising the first word of input data;
at the last word transmission start time, start sending the serialised first word of input data; and
at a last word transmission end time, the last word transmission end time being a word transmission time minus the offset time after the last word transmission start time, muting the sender.

2. The method of claim 1, further comprising: after reading the first word of input data, barrel-shifting the first word of input data by a number of bits corresponding to the offset time.

3. The method of one of claims 1 or 2, further comprising:
determining an early word transmission start time, the early word transmission start time being less than the word transmission time before the start time of the second time-slot;
reading a second word of input data;
serialising the second word of input data;
at the early word transmission start time, muting the sender and start sending the serialised second word of input data; and
at an enable time, the enable time being after the start time of the second time-slot and the word transmission time minus the offset time after the early word transmission start time, enabling the sender.

4. The method of claim 3, further comprising: after reading the second word of input data, barrel-shifting the second word of input data by the number of bits corresponding to the offset time.

5. A transceiver for transmitting data with:
a serialiser having a parallel input, the serialiser being adapted to receive parallel data at an input clock rate, to output serial data at an output clock rate corresponding to the input clock rate multiplied by a serialisation ratio and to start outputting the serial data at one of a plurality of word transmission start times;
a sender having an input connected to the serialiser, the sender being adapted to receive the serial data from the serialiser and to send the serial data during a word transmission time; and
a receiver adapted to receive data;
**characterised in that**
the receiver is further adapted to receive an offset time value;
the sender comprises a first control input for a first control signal and is adapted to cease sending the serial data in response to the first control signal; and **in that**
the transceiver further comprises a controller having a first control output connected to the first control input of the sender and a data input connected to an output of the receiver and adapted to receive the offset time value, the controller being adapted to determine a last word transmission start time of the plurality of word transmission start times and a last word transmission end time, the last word transmission end time being a word transmission time minus the offset time after the last word transmission start time, and to output the first control signal to the sender at the last word transmission end time.

6. The transceiver of claim 5, further comprising a barrel-shifter having a parallel output connected to the parallel input of the serialiser and a second control input connected to a second control output of the controller, wherein the controller is further adapted to output a shift value to the barrel-shifter, the shift value indicating a number of bits having a transmission time corresponding to the offset time value, and wherein the barrel-shifter is adapted to barrel-shift parallel data by the number of bits indicated by the shift value and to output the barrel-shifted parallel data to the serialiser.

7. The transceiver of one of claims 5 or 6, wherein the controller is further adapted to output the first control signal until an enable time, the enable time being the offset time before a first word transmission start time of the plurality of word transmission start times.

## Patentansprüche

1. Verfahren zum Übertragen von Daten von einem Sender zu einem Empfänger, wobei das Verfahren die folgenden Schritte umfasst:
Aufteilen von Übertragungszeit in mehrere Zeitschlitze, die jeweils einen Startzeitpunkt und einen Endezeitpunkt aufweisen;
Vergeben eines ersten Zeitschlitzes der mehreren Zeitschlitze an den Sender;
Bestimmen mehrerer erster Wortübertragungs-Startzeitpunkte zwischen dem Startzeitpunkt und dem Endezeitpunkt des ersten Zeitschlitzes;
Serialisieren eines Synchronisationssignals während des ersten Zeitschlitzes;
Senden des serialisierten Synchronisationssignals während des ersten Zeitschlitzes;
Empfangen des Synchronisationssignals zu einem Empfangszeitpunkt;
Deserialisieren des Synchronisationssignals;
Bestimmen einer Offset-Zeit zwischen dem Empfangszeitpunkt des Synchronisationssignals und einer Wortgrenze im Empfänger;
Übertragen der Offset-Zeit zu dem Sender;
Vergeben eines zweiten der mehreren Zeitschlitze an den Sender;
Bestimmen mehrerer zweiter Wortübertragungs-Startzeitpunkte zwischen dem Startzeitpunkt und dem Endezeitpunkt des zweiten Zeitschlitzes;
Bestimmen eines letzten Wortübertragungs-Startzeitpunkts der mehreren zweiten Wortübertragungs-Startzeitpunkte;
Lesen eines ersten Worts von Eingangsdaten;
Serialisieren des ersten Worts von Eingangsdaten;
Starten des Sendens des serialisierten ersten Worts von Eingangsdaten zu dem letzten Wortübertragungs-Startzeitpunkt; und
Stummschalten des Senders zu einem letzten Wortübertragungs-Endezeitpunkt, wobei der letzte Wortübertragungs-Endezeitpunkt ein Wortübertragungs-Zeitpunkt minus der Offset-Zeit nach dem letzten Wortübertragungs-Startzeitpunkt ist.

2. Verfahren nach Anspruch 1, ferner mit dem folgenden Schritt: Barrel-Schieben des ersten Worts von Eingangsdaten um eine der Offset-Zeit entsprechende Anzahl von Bit nach dem Lesen des ersten Worts von Eingangsdaten.

3. Verfahren nach einem der Ansprüche 1 oder 2, ferner mit den folgenden Schritten:
Bestimmen eines Früh-Wortübertragungs-Startzeitpunkts, wobei der Früh-Wortübertragungs-Startzeitpunkt kleiner als der Wortübertragungs-zeitpunkt vor dem Startzeitpunkt des zweiten Zeitschlitzes ist;
Lesen eines zweiten Worts von Eingangsdaten;
Serialisieren des zweiten Worts von Eingangsdaten;
Stummschalten des Senders zu dem Früh-Wortübertragungs-Startzeitpunkt und Starten des Sendens des serialisierten zweiten Worts von Eingangsdaten; und
Freigeben des Senders zu einem Freigabezeitpunkt, wobei der Freigabezeitpunkt nach dem Startzeitpunkt des zweiten Zeitschlitzes und dem Wortübertragungs-Zeitpunkt minus der Offset-Zeit nach dem Früh-Wortübertragungs-Startzeitpunkt kommt.

4. Verfahren nach Anspruch 3, ferner mit dem folgenden Schritt: Barrel-Schieben des zweiten Worts von Eingangsdaten um die der Offset-Zeit entsprechende Anzahl von Bit nach dem Lesen des zweiten Worts von Eingangsdaten.

5. Sender/Empfänger zum Senden von Daten, mit:
einem Serialisierer, der einen parallelen Eingang aufweist, wobei der Serialisierer dafür ausgelegt ist, parallele Daten mit einer Eingangstaktrate zu empfangen, serielle Daten mit einer Ausgangstaktrate auszugeben, die der Eingangstaktrate multipliziert mit einem Serialisierungsverhältnis entspricht, und das Ausgeben der seriellen Daten zu einem von mehreren Wortübertragungs-Startzeitpunkten zu starten;
einem Sender mit einem mit dem Serialisierer verbundenen Eingang, wobei der Sender dafür ausgelegt ist, die seriellen Daten von dem Serialisierer zu empfangen und die seriellen Daten während einer Wortübertragungs-Zeit zu senden; und
einem Empfänger, der dafür ausgelegt ist, Daten zu empfangen;
**dadurch gekennzeichnet, dass**
der Empfänger ferner dafür ausgelegt ist, einen Offset-Zeitwert zu empfangen;
der Sender einen ersten Steuereingang für ein erstes Steuersignal umfasst und dafür ausgelegt ist, mit dem Senden der seriellen Daten als Reaktion auf das erste Steuersignal aufzuhören; und **dadurch**, dass
der Sender/Empfänger ferner eine Steuerung umfasst, die einen mit dem ersten Steuereingang des Senders verbundenen ersten Steuerausgang und einen mit einem Ausgang des Empfängers verbundenen und zum Empfang des Offset-Zeitwerts ausgelegten Dateneingang aufweist, wobei die Steuerung dafür ausgelegt ist, einen letzten Wortübertragungs-Startzeitpunkt der mehreren Wortübertragungs-Startzeitpunkte und einen letzten Wortübertragungs-Endezeitpunkt zu bestimmen, wobei der letzte Wortübertragungs-Endzeitpunkt ein Wortübertragungs-Zeitpunkt minus der Offset-Zeit nach dem letzten Wortübertragungs-Startzeitpunkt ist, und das erste Steuersignal zu dem letzten Wortübertragungs-Endezeitpunkt an den Sender auszugeben.

6. Sender/Empfänger nach Anspruch 5, der ferner einen Barrel-Schieber umfasst, der einen mit dem parallelen Eingang des Serialisierers verbundenen parallelen Ausgang und einen mit einem zweiten Steuerausgang der Steuerung verbundenen zweiten Steuereingang aufweist, wobei die Steuerung ferner dafür ausgelegt ist, einen Schiebewert an den Barrel-Schieber auszugeben, wobei der Schiebewert eine Anzahl von Bit angibt, die einen Übertragungszeitpunkt aufweisen, der dem Offset-Zeitwert entspricht, und wobei der Barrel-Schieber dafür ausgelegt ist, parallele Daten um die durch den Schiebewert angegebene Anzahl von Bit zu barrelschieben und die barrelgeschobenen parallelen Daten an den Serialisierer auszugeben.

7. Sender/Empfänger nach einem der Ansprüche 5 oder 6, wobei die Steuerung ferner dafür ausgelegt ist, das erste Steuersignal bis zu einem Freigabezeitpunkt auszugeben, wobei der Freigabezeitpunkt die Offset-Zeit vor einem ersten Wortübertragungs-Startzeitpunkt der mehreren Wortübertragungs-Startzeitpunkte ist.

## Revendications

1. Un procédé de transmission de données d'un expéditeur à un récepteur, le procédé comprenant :
la division d'une durée de transmission en une pluralité d'intervalles de temps, chacun d'eux possédant un instant de début et un instant de fin,
l'attribution d'un premier intervalle de temps de la pluralité d'intervalles de temps à l'expéditeur,
la détermination d'une pluralité d'instants de début de transmission de premier mot entre l'instant de début et l'instant de fin du premier intervalle de temps,
au cours du premier intervalle de temps, la sérialisation d'un signal de synchronisation,
au cours du premier intervalle de temps, l'envoi du signal de synchronisation sérialisé,
la réception du signal de synchronisation à un instant de réception,
la désérialisation du signal de synchronisation,
la détermination d'une durée de décalage entre l'instant de réception du signal de synchronisation et une frontière de mot sur le récepteur,
la transmission de la durée de décalage à l'expéditeur,
l'attribution d'un deuxième intervalle de temps de la pluralité d'intervalles de temps à l'expéditeur,
la détermination d'une pluralité d'instants de début de transmission de deuxième mot entre l'instant de début et l'instant de fin du deuxième intervalle de temps,
la détermination d'un instant de début transmission de dernier mot de la pluralité d'instants de début de transmission de deuxième mot,
la lecture d'un premier mot des données entrées,
la sérialisation du premier mot des données entrées,
à l'instant de début transmission de dernier mot, le démarrage de l'envoi du premier mot sérialisé des données entrées, et
à l'instant de fin de transmission de dernier mot, l'instant de fin de transmission de dernier mot étant une durée de transmission de mot moins la durée de décalage après l'instant de début transmission de dernier mot, la mise en mode muet de l'expéditeur.

2. Le procédé selon la revendication 1, comprenant en outre : après la lecture du premier mot des données entrées, l'exécution d'un décalage à barillet du premier mot des données entrées par un nombre de bits correspondant à la durée de décalage.

3. Le procédé selon la revendication 1 ou 2, comprenant en outre :
la détermination d'un instant de début de transmission de mot précoce, l'instant de début de transmission de mot précoce étant moins que la durée de transmission de mot avant l'instant de début du deuxième intervalle de temps,
la lecture d'un deuxième mot des données entrées,
la sérialisation du deuxième mot des données entrées,
à l'instant de début de transmission de mot précoce, la mise en mode muet de l'expéditeur et le démarrage de l'envoi du deuxième mot sérialisé des données entrées, et
à un instant d'activation, l'instant d'activation étant après l'instant de début du deuxième intervalle de temps et la durée de transmission de mot moins la durée de décalage après l'instant de début de transmission de mot précoce, l'activation de l'expéditeur.

4. Le procédé selon la revendication 3, comprenant en outre : après la lecture du deuxième mot des données entrées, l'exécution d'un décalage à barillet du deuxième mot des données entrées par le nombre de bits correspondant à la durée de décalage.

5. Un émetteur-récepteur destiné à transmettre des données comprenant :
un sérialiseur possédant une entrée parallèle, le sérialiseur étant adapté de façon à recevoir des données en parallèle à une fréquence d'horloge en entrée, à produire des données en série à une fréquence d'horloge en sortie correspondant à la fréquence d'horloge en entrée multipliée par un rapport de sérialisation et à commencer à produire les données en série à un instant d'une pluralité d'instants de début de transmission de mot,
un expéditeur possédant une entrée reliée au sérialiseur, l'expéditeur étant adapté de façon à recevoir les données en série du sérialiseur et à envoyer les données en série au cours d'une durée de transmission de mot, et
un récepteur adapté de façon à recevoir des données,
**caractérisé en ce que**
le récepteur est adapté en outre de façon à recevoir une valeur de durée de décalage,
l'expéditeur comprend une première entrée de commande pour un premier signal de commande et est adapté de façon à cesser l'envoi des données en série en réponse au premier signal de commande, et **en ce que**
l'émetteur-récepteur comprend en outre un système de commande possédant une première sortie de commande reliée à la première entrée de commande de l'expéditeur et une entrée de données reliée à une sortie du récepteur et adaptée de façon à recevoir la valeur de durée de décalage, le système de commande étant adapté de façon à déterminer un instant de début transmission de dernier mot de la pluralité d'instants de début de transmission de mot et un instant de fin de transmission de dernier mot, l'instant de fin de transmission de dernier mot étant une durée de transmission de mot moins la durée de décalage après l'instant de début transmission de dernier mot, et à envoyer le premier signal de commande à l'expéditeur à l'instant de fin de transmission de dernier mot.

6. L'émetteur-récepteur selon la revendication 5, comprenant en outre un décaleur à barillet possédant une sortie parallèle reliée à l'entrée parallèle du sérialiseur et une deuxième entrée de commande reliée à une deuxième sortie de commande du système de commande, dans lequel le système de commande est adapté en outre de façon à envoyer une valeur de décalage au décaleur à barillet, la valeur de décalage indiquant un nombre de bits possédant une durée de transmission correspondant à la valeur de durée de décalage, et dans lequel le décaleur à barillet est adapté de façon à exécuter un décalage à barillet des données en parallèle par le nombre de bits indiqué par la valeur de décalage et à envoyer les données en parallèle décalées par un décalage à barillet au sérialiseur.

7. L'émetteur-récepteur selon la revendication 5 ou 6, dans lequel le système de commande est adapté en outre de façon à produire le premier signal de commande jusqu'à un instant d'activation, l'instant d'activation étant la durée de décalage avant un instant de début de transmission de premier mot de la pluralité d'instants de début de transmission de mot.
